# EUROPÄISCHE PATENTANMELDUNG

(11) **EP 4 302 963 A1**
(43) Veröffentlichungstag der Anmeldung: **10.01.2024**
(21) Anmeldenummer: 22182744.7
(22) Anmeldetag: 04.07.2022
(51) Int. Cl.: B29C 49/42, B29C 49/78, F16K 31/04, F16K 37/00

(54) **DROSSELEINHEIT**

(71) Anmelder: Eugen Seitz AG, 8623 Wetzikon (CH)
(72) Erfinder: KEEL, Manuel, 5103 Wildegg (CH); ERNI, Marco, 5632 Buttwil (CH)
(74) Vertreter: Clerc, Natalia

(57) **Zusammenfassung**

Eine Drosseleinheit, insbesondere einer Blasformvorrichtung, weist eine Drossel (2) und einen Positionssensor (3) auf. Die Drossel (2) weist ein Stellglied (22) und eine Antriebseinheit mit einem Elektromotor (21) zur Veränderung einer Position des Stellglieds (22) auf, wobei durch Veränderung der Position des Stellglieds (22) ein Durchflussquerschnitt in einem Durchflusskanal (12) eines Fluids veränderbar ist. Die Antriebseinheit ist an einem ersten Ende des Stellglieds (22) angeordnet ist. Der Positionssensor (3) überwacht die Position des Stellglieds (22) direkt. Die Drosseleinheit ermöglicht eine genaue und trotzdem kostengünstige automatische Einstellung und Justierung der Drossel.

## Beschreibung

### TECHNISCHES GEBIET

Die vorliegende Erfindung betrifft eine Drosseleinheit und eine Vorrichtung mit einer Drosseleinheit, insbesondere einer Blasformvorrichtung. Die Drosseleinheit eignet sich insbesondere zur Verwendung in einer Extrusionsblas- oder einer Streckblasmaschine zur Fertigung von Hohlkörpern aus Kunststoff.

### STAND DER TECHNIK

Blaseinrichtungen bzw. Blasmaschinen dienen der Formung von Hohlkörpern, insbesondere zur Herstellung von Kunststoff-Flaschen aus PP (Polypropylen) oder PET (Polyethylenterephthalat). Üblicherweise wird ein vortemperierter Vorformling mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen.

Die einzelnen Blasschritte werden mittels Ventilen gesteuert, an die hohe Anforderungen gestellt werden. Während des Blasprozesses wird das Prozessgas, üblicherweise Blasluft, mit unterschiedlichen Drücken eingeleitet. So wird während des Vorblasens Blasluft mit einem tieferen Druck, z.B. 10 bar, verwendet als während des Hauptblasens, z.B. 40 bar. Auch lässt sich das Hauptblasen in mehreren Stufen mit unterschiedlichen Drücken durchführen. Für jeden Schritt des Blasprozesses werden deshalb eigene Ventile verwendet, wobei Drosseln vorhanden sind, um den Volumenstrom respektive den Druckanstieg der Blasluft mindestens in der Vorblasphase und somit mindestens für die Vorblasventile anzupassen. Mittels der Drossel wird ein Durchflussquerschnitt eingestellt. Die Grösse des Querschnitts wird abhängig von verschiedenen Parametern eingestellt, wie beispielsweise dem Material des Vorformlings, der Wanddicke des Vorformlings und der Temperatur des Vorformlings. Diese Einstellung der Drossel wird üblicherweise während des Betriebs beibehalten. Der Querschnitt wird jedoch bei Wechsel der Art des herzustellenden Hohlkörpers und auch bei Alterung der Drossel oder anderer Bauteile der Blasformvorrichtung neu eingestellt bzw. justiert. Die Einstellung und die Justierung erfolgen im Stand der Technik üblicherweise manuell.

Vorzugsweise weist jeder Ventilblock mindestens eine Drossel auf, d.h. jeder Station zur Aufnahme eines aufzublasenden Hohlkörpers ist mindestens eine eigene Drossel zugeordnet. Je nach Grösse der Anlage sind somit bis zu 36 Drosseln auf einem Blasrad angeordnet.

Die manuelle Einstellung dieser Vielzahl an Drosseln ist somit zeitaufwändig und fehleranfällig. Eine manuelle Nachjustierung oder Regelung während des laufenden Betriebs der Blasformvorrichtung ist kaum möglich.

EP 3 063 441 B1 offenbart eine motorbetriebene Drossel, bei der das Stellglied gegenüber einem Aussengehäuse gedichtet ist.

EP 3 541 599 B1 offenbart ein federbelastetes Proportionalventil mit einem Proportionalmagnet als Antrieb, einem Hallsensor als Positionssensor und mit einem Drucksensor zur Überwachung des Fluiddrucks. Der Hallsensor misst die Position des Ankers des Proportionalmagnets.

EP 2 669 069 B1 zeigt ein Regelventil mit einem Drosselelement und einem Abstandsensor zur Bestimmung der Position des Drosselelements. Die Position des Drosselelements wird in Abhängigkeit der gemessenen Position und des Drucks des Blasfluids mittels einer Steuerung eingestellt.

EP 2 977 184 B1 schlägt eine Vorrichtung ohne derartige Drosselventile zur Reduzierung des Blasdrucks in der Vorblasphase vor. Die Vorrichtung verwendet ein Regelventil, das in Abhängigkeit von einem Steuersignal eingestellt wird. Das Regelventil ist nicht im Detail beschrieben. Die Ansteuerung eines derartigen Regelventils, das den Druck für die Vorblas- und die Hauptventile regeln soll, ist jedoch komplex und entsprechend kostenintensiv.

### DARSTELLUNG DER ERFINDUNG

Es ist deshalb eine Aufgabe der Erfindung, eine Drosseleinheit und eine Vorrichtung mit einer Drosseleinheit zu schaffen, die eine genaue und trotzdem kostengünstige automatische Einstellung und Justierung der Drossel ermöglichen.

Diese Aufgabe lösen eine Drosseleinheit und eine Vorrichtung mit einer Drosseleinheit mit den Merkmalen des Anspruchs 1 bzw. 14.

Die erfindungsgemässe Drosseleinheit eignet sich zur Verwendung in einer Blasformvorrichtung, beispielsweise in einer Extrusionsblas- oder einer Streckblasmaschine zur Fertigung von Hohlkörpern aus Kunststoff, insbesondere von Kunststoff-Flaschen aus PET oder PP.

Sie weist eine Drossel und einen Positionssensor auf. Die Drossel weist ein Stellglied und eine Antriebseinheit mit einem Elektromotor zur Veränderung einer Position des Stellglieds auf, wobei durch Veränderung der Position des Stellglieds ein Durchflussquerschnitt in einem Durchflusskanal eines Fluids veränderbar ist. Die Antriebseinheit ist an einem ersten Ende des Stellglieds angeordnet. Erfindungsgemäss überwacht der Positionssensor direkt die Position des Stellglieds.

Dadurch lässt sich die Position des Stellglieds genau bestimmen.

Die direkte Überwachung des Stellglieds ermöglicht die Verwendung eines kostengünstigen Elektromotors zur Verstellung des Stellglieds. Insbesondere lässt sich ein einfacher Gleichstrommotor, auch DC-Motor genannt, verwenden. Der Elektromotor kann klein ausgebildet sein, ein mehrstufiges Getriebe und ein relativ grosses Spiel aufweisen.

Die direkte Überwachung beinhaltet auch eine Überwachung eines mit dem Grundkörper des Stellglieds fest verbundenen Elements, das sich gemeinsam mit dem Stellglied bewegt und das anstelle des Stellglieds selber überwacht wird. Dieses Element ist durch die feste Verbindung als Bestandteil des Stellglieds zu verstehen. Dies kann beispielsweise ein am Stellglied angeordneter Zeiger oder eine starre, vorstehende Fahne sein.

Die Drosseleinheit lässt sich dadurch in einen Ventilblock der Blasformvorrichtung integrieren. Die Drossel und die Antriebseinheit lassen sich zudem als gemeinsames Bauteil, d.h. als Modul, ausführen. Das gesamte Modul lässt sich auf einfache Art und Weise im Ventilblock oder am Ort ihrer Verwendung einbauen und wieder entfernen. Dies ist insbesondere bei Ventilblöcken vorteilhaft, da die Platzverhältnisse bei Blasformvorrichtungen beengt sind.

Vorzugsweise dient das Gehäuse des Ventilblocks selber als Gehäuse für das Modul. D.h. das Stellglied ist direkt im Durchflusskanal des Ventilblocks angeordnet und der Elektromotor ist nicht mit einem eigenen geschlossenen Gehäuse geschützt. Da der Ventilblock als Motorgehäuse dienen kann, sind keine speziellen weiteren Anforderungen an Hygiene und Dichtheit zu beachten.

Vorzugsweise weist das Bauteil im Wesentlichen die Form eines länglichen Kreiszylinders auf, der sich in eine Bohrung im Ventilblock einschieben lässt. Das Auswechseln dieses Verbrauchsmaterials ist dadurch vereinfacht.

Dank der Verwendung eines Positionssensors lässt sich die Drossel elektronisch einstellen. In bevorzugten Ausführungsformen lässt sich die Einstellung nicht nur ausserhalb des Betriebszustandes, sondern auch während des Betriebs verstellen. Sie lässt sich je nach Ausführungsform zwischen zwei Blasprozessen oder sogar während des Blasprozesses ändern. Dadurch lässt sich die Drosseleinstellung nach Massgabe von Prozessdaten regeln, beispielsweise aufgrund einer Druckanstiegskurve. Prozessdaten lassen sich beispielsweise von Sensoren erhalten, welche die Vorblas- und/oder Hauptblasventile oder den Blasdruck im Bereich des Vorformlings oder die Formveränderung der Vorformlinge überwachen.

Vorzugsweise werden die gemessenen Positionsdaten einer Steuereinheit übermittelt. Dies erhöht die Prozesssicherheit, da die tatsächliche Position des Stellglieds bekannt ist. Zudem kann die Steuereinheit aufgrund dieser gemessenen Positionsdaten und nach Massgabe von Steuerwerten einer Maschinensteuerung oder eigenständig die Position der Drossel verändern.

Dadurch lässt sich auf einfache Art und Weise sicherstellen, dass alle Stationen eine korrekte Drosseleinstellung aufweisen. Die Drosseleinstellungen lassen sich mittels der Steuereinheit verändern. Eine manuelle Einstellung an den einzelnen Stationen erübrigt sich, so dass die Einstellung der Drosseleinheiten wesentlich effizienter erfolgt. Die Einstellung lässt sich zudem mittels der Steuereinheit des Ventilblocks und/oder der Maschinensteuerung automatisieren.

Ist eine Justierung und/oder eine Regelung während des Betriebs der Blasformvorrichtung möglich, lässt sich eine konstantere Behälterqualität erhalten. Auch die Ausschussquote lässt sich reduzieren. Je nach Ausführungsform erfolgt die Justierung oder Regelung manuell an einer Eingabeeinheit der Maschinensteuerung oder der Steuereinheit des Ventilblocks. In anderen Ausführungsformen erfolgt sie über eine Eingabeeinheit der Maschinensteuerung.

Die Drosseleinheit wird vorzugsweise lediglich zur Einstellung einer Grundeinstellung des Volumenstroms respektive des Druckanstiegs im Blasprozess verwendet, wobei die Grundeinstellung während eines Blasprozesses grundsätzlich nicht verändert. Teilweise werden zusätzlich zwischen einzelnen Blaszyklen geringfügige, nicht zeitkritische Veränderungen der Position des Stellkörpers durchgeführt. Deshalb genügt eine im Vergleich zu den Schaltzeiten der Vor- und Hauptblasventile langsamere Bewegung der Drossel. Der oben erwähnte einfach und somit kostengünstige DC-Getriebemotor reicht für den Verwendungszweck aus.

Vorzugsweise dient die Drosseleinheit zur Einstellung des Vorblasdrucks. Sollen auch im Hauptblasprozess verschiedene Blasdrücke werden, so lassen sich weitere Drosseleinheiten gemäss dem erfinderischen Prinzip verwenden.

Die erfindungsgemässe Kombination der Anordnung des Positionssensors mit dem geschlossen ausgebildeten Ende des Stellglieds lässt sich zudem in Drosseleinheiten, insbesondere in Regelventilen, verwenden, bei denen das Stellglied zur Durchführung des Prozesses verändert wird, d.h. dass mittels des Stellglieds der Prozessdruck oder der Fluidvolumenstrom verändert wird, um die Vorrichtung zu betreiben. Vorzugsweise dient die Drosseleinheit jedoch ausschliesslich zur Einstellung und Regelung einer Grundeinstellung des Prozessdrucks oder des Fluidvolumenstroms, wie oben dargelegt. Die erfindungsgemässe Drosseleinheit lässt sich zudem in anderen Vorrichtungen verwenden. Der Erfindungsgedanke ist nicht auf Blasformvorrichtungen beschränkt.

Der Positionssensor ist vorzugsweise im Bereich eines dem ersten Ende gegenüberliegenden zweiten Endes des Stellglieds angeordnet. Dies vereinfacht die zylinderförmige Ausbildung der Drossel. Dabei kann der Positionssensor in radialer Richtung des Stellglieds zu diesem hingerichtet sein. Vorzugsweise ist er jedoch stirnseitig angeordnet.

Vorzugsweise weist das Stellglied einen Strömungskanal auf, der vom Fluid durchströmbar ist, wobei das Stellglied am zweiten Ende bezüglich des Strömungskanals geschlossen ausgebildet ist. Dies erleichtert die Anordnung des Positionssensors, da somit das Fluid die Drosseleinheit in radialer Richtung verlässt und nicht stirnseitig.

Das erste Ende und das zweite Ende definieren vorzugsweise eine Längsmittelachse, wobei das Stellglied um die Längsmittelachse drehbar ist. Je nach Ausführungsform bewegt sich das Stellglied entlang der Längsmittelachse, wobei je nach Ausführungsform zusätzlich eine Drehbewegung überlagert ist. In bevorzugten Ausführungsformen dreht oder schwenkt sich das Stellglied lediglich um die Längsmittelachse, ohne eine Bewegung in Längsrichtung. Es ist somit in Richtung der Längsmittelachse ortsfest, wobei auch der Positionssensor vorzugsweise ortsfest in Längsrichtung nach dem Stellglied angeordnet ist.

Es lassen sich unterschiedliche Arten von Positionssensoren, wie beispielsweise optische oder kapazitive Sensoren einsetzen. Vorzugsweise ist der Positionssensor jedoch ein Magnetfeldsensor, insbesondere ein Hall-Sensor. Diese Positionssensoren sind relativ klein und wenig störungsanfällig.

Wird ein Magnetfeldsensor verwendet, ist vorzugsweise ein Magnet oder ein magnetisierbares Element in der Drossel, vorzugsweise im Stellglied, angeordnet.

In bevorzugten Ausführungsformen ist der Magnet ein Permanentmagnet. Der Permanentmagnet ist vorzugsweise aus einem hartmagnetischen Material gefertigt. In anderen Ausführungsformen ist der Magnet ein Elektromagnet und wird in Kombination mit einem magnetisierbaren Element verwendet.

Das magnetisierbare Element ist vorzugsweise aus einem weichmagnetischen Werkstoff gefertigt und noch bevorzugter aus einem magnetisch leitenden Material mit geringer Remanenz und noch bevorzugter aus einem magnetisch leitenden Material mit sehr geringer Remanenz.

Ist ein magnetisierbares Element vorhanden, so ist ein zugehöriger Magnet, insbesondere ein Permanentmagnet oder ein Elektromagnet, vorzugsweise ortsfest angeordnet, vorzugsweise benachbart zum Positionssensor.

Der Magnet bzw. das magnetisierbare Element ist vorzugsweise benachbart zum Positionssensor angeordnet. Vorzugsweise ist der Magnet oder das magnetisierbare Element in oder an einem stirnseitigen Bereich der Drossel angeordnet.

Je nach Ausführungsform ist der Magnet ein Stabmagnet oder ein Scheibenmagnet. Der Magnet ist vorzugsweise mit seiner durch seinen Nord- und Südpol definierten Achse senkrecht zu einer Drehachse des Stellglieds angeordnet, so dass eine Drehung des Stellglieds eine Veränderung des vom Positionssensor detektierten Magnetfelds bewirkt. Vorzugsweise ist der Magnet zentrisch zur Längsachse der Drossel angeordnet. Azentrische Anordnungen sind auch möglich.

Toleranzen in der Ausrichtung des Magneten bzw. des magnetisierbaren Elements bezüglich des Sensors lassen sich beispielsweise kompensieren, indem ein Winkelfehler auf übliche Art und Weise bestimmt wird. Die Angabe zum Winkelfehler lässt sich in der Steuerung speichern und bei Verwendung der Drossel berücksichtigen. Die Information betreffend Winkelfehler lässt sich separat in die Steuerung eingeben. Vorzugsweise ist sie jedoch produktionsseitig auf einem Speicherelement gespeichert, beispielsweise auf einem RFID Tag. Das Speicherelement ist vorzugsweise an oder in der Drosseleinheit angeordnet und vorzugsweise fest mit ihr verbunden. Es kann dadurch bei Verwendung der Drosseleinheit von der Steuereinheit gelesen und eindeutig mit der Drosseleinheit identifiziert werden. Auf dem Speicherelement lassen sich weitere Daten speichern, die von der Steuereinheit bzw. der Maschinensteuerung benützt werden können. Derartige Daten sind beispielsweise die Kennlinie der Drossel oder lebensdauerrelevante Informationen, die teilweise erst beim Betrieb entstehen, wie Zyklen oder zu fahrende bzw. bereits gefahrene Winkelgrade.

Alternativ oder zusätzlich lässt sich der Magnet oder das magnetisierbare Element auch möglichst genau positionieren. Dies erfolgt beispielsweise durch ein ausgerichtetes Befestigen, insbesondere Verkleben oder Vergiessen des Magneten bzw. des magnetisierbaren Elements. Dabei wird mit einem Messsystem der exakte Vektor des Magneten bestimmt und die Aufnahmeöffnung, die den Magneten im Stellglied aufnimmt, entsprechend ausgebildet.

Alternativ oder zusätzlich lässt sich im Stellglied auch ein Indikator, beispielsweise in Form eines Nockens oder eine Auskerbung, anbringen, welcher als mechanischer Anschlag dient. In einer Referenzfahrt fährt der Elektromotor mit reduzierter Kraft auf diesen Anschlag. Der Stromanstieg im Elektromotor beim Erreichen des Anschlags wird detektiert und diese Position wird als Ausgangsposition, d.h. als Position "0" gespeichert.

Die Nullstellung des Stellglieds lässt sich somit vorzugsweise für jede Drosseleinheit genau erkennen, entweder indem der Magnetfehler bereits bei der Fertigung kompensiert wird oder indem er bei fertig gestellter Drosseleinheit bestimmt und von einer Steuerung berücksichtigt wird.

Das Stellglied lässt sich auf verschiedene Art und Weise ausgestalten. Vorzugsweise weist es Öffnungen und/oder Ausnehmungen auf, die vom Fluid durchflossen werden und somit einen Strömungskanal bilden. Diese Öffnungen und/oder Ausnehmungen lassen sich an unterschiedlichen Stellen des Stellglieds ausbilden. In einem bevorzugten Ausführungsbeispiel befinden sie sich jedoch alle beabstandet zum zweiten Ende des Stellglieds.

Je nach Ausführungsform verändert das Stellglied den Durchflussquerschnitt stufenweise oder kontinuierlich, d.h. stufenlos. Die kontinuierliche Einstellbarkeit ist bevorzugt.

In einer sehr bevorzugten Ausführungsform weist das Stellglied einen kreiszylinderförmigen Grundkörper auf mit einer nach aussen offen ausgebildeten, sich windenden Vertiefung. Diese Geometrie ermöglicht eine gleichmässige Volumenstromveränderung über einen relativ grossen Stellwinkel.

Dieses Stellglied ermöglicht somit auf einfache Art und Weise eine kontinuierliche Einstellbarkeit. Zudem lässt sich dieses Stellglied auf einfache Art und Weise herstellen. Da es keine Durchgangsöffnungen für das Fluid aufweist, ist des Weiteren genügend Platz für eine direkte Verbindung des Stellglieds mit einer Motorachse des Elektromotors und zur Anordnung des Magneten bzw. des magnetisierbaren Elements vorhanden. Das Stellglied lässt sich somit relativ klein ausbilden.

In bevorzugten Ausführungsformen weist die sich windende Vertiefung eine Abwicklung auf, die aus Schenkeln und einem die zwei Schenkel miteinander verbindenden Steg besteht. Vorzugsweise verlaufen die zwei Schenkel der Abwicklung annähernd parallel zueinander.

Dies ermöglicht die Verwendung eines grossen Stellwinkelbereichs. Er beträgt circa 300°. Die Zuordnung von Stellwinkel und Durchflussmenge bzw. Strömungswiderstand ist dadurch vereinfacht. Der Stellwinkel lässt sich maximal ausnutzen und die Präzision der Drossel ist erhöht. Des Weiteren lassen sich dadurch kostengünstige und weniger genaue Elektromotoren verwenden.

Vorzugsweise verlaufen die zwei Schenkel der Abwicklung senkrecht zur Längsmittelachse des Stellglieds. Dadurch ist der Anschnittswinkel des durchströmenden Fluids senkrecht zum kolbenförmigen Stellwinkel.

Dank dieser Ausbildung des Stellglieds mit der oben genannten Abwicklung ist die Drosseleinheit auch relativ unempfindlich gegenüber axialen Verschiebungen des Stellglieds.

Dank der sich windenden Vertiefung und insbesondere bei Ausbildung der Vertiefung wie oben beschrieben, erzeugt das durchströmende Fluid kaum oder nur ein geringes Drehmoment auf die Längsachse des Stellglieds und somit auf die Motorachse des Elektromotors. Der Motor der Drossel wird somit weniger beansprucht und altert langsamer. Sie kann länger verwendet werden.

Das Stellglied mit der sich windenden Vertiefung, insbesondere mit Abwicklung in Form von zwei Schenkeln mit einem die Schenkel miteinander verbindenden Steg, ferner insbesondere mit einer Abwicklung, die zwei parallel verlaufende Schenkel aufweist, die vorzugsweise senkrecht zur Längsmittelsachse und somit zur Drehachse des Stellglieds verlaufen, wird hier als eigenständige Erfindung beansprucht, auch ohne Positionssensor und/oder ohne direkte Verbindung mit dem Elektromotor.

Vorteilhaft an diesem Stellglied ist, dass sich die Form der Abwicklung der Vertiefung je nach Verwendungszweck der Drossel wählen lässt. So lässt sich eine Drosseleinheit schaffen, für die sich wahlweise und je nach Kundenspezifikation eine andere Strömungskanalform einsetzen lässt. Dies minimiert die Herstellungskosten und maximiert die Flexibilität in der Gestaltung der Drossel.

Das Stellglied lässt sich mehrteilig ausführen. Vorzugsweise ist es jedoch einteilig ausgeführt. Dies erleichtert die Herstellung und die Verbindung mit der Antriebseinheit.

In bevorzugten Ausführungsformen weist die Antriebseinheit eine Motorwelle auf, die dynamisch gedichtet ist. Die Motorwelle ist dabei vorzugsweise direkt mit dem Stellglied verbunden. Vorzugsweise ist die dynamische Dichtung der Motorwelle die einzige dynamische Dichtung zur Dichtung der Drossel gegenüber einem äusseren Gehäuse, welches die Drossel aufnimmt. Diese Dichtung weist somit einen sehr kleinen Durchmesser auf. Dies ist vorteilhaft, weil dadurch die Reibungskräfte, welche sich negativ auf das Drehmoment auswirken, sehr klein gehalten sind. Dank der kleinen dynamischen Dichtung sind auch die Axialkräfte, die sich auf den Elektromotor übertragen könnten, sehr klein gehalten, so das der Motor genauer arbeitet und länger verwendet werden kann.

Axialkräfte lassen sich aufheben oder zumindest weiter vermindern, indem das Stellglied, insbesondere das zylinderförmige Stellglied, auf beiden Stirnseiten symmetrisch gedichtet ist, beispielsweise indem am gegenüberliegenden zweiten Ende ein Gegenzapfen angeordnet ist. Dies ist in weiteren Ausführungsformen umgesetzt.

Die Idee der dynamischen Dichtung der Motorwelle in einer Drossel mit Stellglied und Antriebseinheit wird hier als eigenständige Erfindung beansprucht, auch ohne Positionssensor.

Insbesondere lässt sich diese Idee auch mit einem leistungsfähigen, spielfreien Motor, beispielsweise einem bürstenlosen DC-Motor oder einem Schrittmotor verwenden. Dadurch lässt sich eine Proportional-Drossel verwirklichen, die beispielsweise eine Nachregelung der Druckkurve ermöglicht.

Die erfindungsgemässe Vorrichtung weist die oben beschriebene Drosseleinheit sowie ein Aussengehäuse mit dem Durchlasskanal auf. Das Aussengehäuse ist vorzugsweise ein Ventilblock einer Blasformvorrichtung. Das Stellglied ist im Durchlasskanal angeordnet, wobei der Durchlasskanal eine Eingangsöffnung zur Zuführung des Fluids in den Strömungskanal des Stellglieds und eine Ausgangsöffnung zur Wegführung des Fluids aus dem Strömungskanal des Stellglieds aufweist. Die Eingangsöffnung und die Ausgangsöffnung sind quer zur Längsmittelachse des Stellglieds angeordnet.

Dies ermöglicht die direkte Verbindung des Stellglieds mit der Motorachse entlang der Längsrichtung des Stellglieds und somit die Ausbildung der Drossel als Modul, das gesamthaft, d.h. inklusive dem Elektromotor, im Aussengehäuse angeordnet werden kann. Vorzugsweise weist das Aussengehäuse hierzu eine Bohrung zur Aufnahme der Drosseleinheit auf, wobei ein Teil der Bohrung Teil des Durchlasskanals ist.

Vorzugsweise weist die Drossel an ihrem dem Stellglied fernen Ende einen Flansch auf, der zur Fixierung des Moduls im Aussengehäuse dient. Diese Fixierung lässt sich mit einer einzigen Schraube erzielen, so dass die Montage und das Auswechseln des Moduls sehr einfach und schnell erfolgen kann.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines Ventilblocks einer Blasformvorrichtung mit der erfindungsgemässen Drosseleinheit, wobei der Ventilblock teilweise geschnitten dargestellt ist;
- Figur 2: eine perspektivische Darstellung eines Positionssensors der erfindungsgemässen Drosseleinheit gemäss Figur 1;
- Figur 3: eine schematische Darstellung der erfindungsgemässen Drosseleinheit in einer ersten Kombination mit einer Vorrichtung;
- Figur 4: eine schematische Darstellung der erfindungsgemässen Drosseleinheit in einer zweiten Kombination mit einer Vorrichtung;
- Figur 5: einen Teilschnitt durch einen Teil des Ventilblocks gemäss Figur 1 mit eingebauter erfindungsgemässer Drosseleinheit;
- Figur 6: eine perspektivische Darstellung der Drosseleinheit gemäss Figur 1;
- Figur 7: einen Längsschnitt durch die Anordnung gemäss Figur 5;
- Figur 8: einen Längsschnitt durch einen Ventilblock mit eingebauter erfindungsgemässer Drosseleinheit in einer weiteren Ausführungsform;
- Figur 9: ein Stellglied der erfindungsgemässen Drosseleinheit gemäss Figur 7;
- Figur 10: das Stellglied gemäss Figur 9 mit Darstellung der Abwicklung ihrer Vertiefung;
- Figur 11: ein Stellglied der erfindungsgemässen Drosseleinheit in einer zweiten Ausführungsform;
- Figur 12: ein Stellglied der erfindungsgemässen Drosseleinheit in einer dritten Ausführungsform und
- Figur 13: einen Teil der erfindungsgemässen Drosseleinheit mit eingebautem Speicherelement.

### BESCHREIBUNG BEVORZUGTER AUSFÜHRUNGSFORMEN

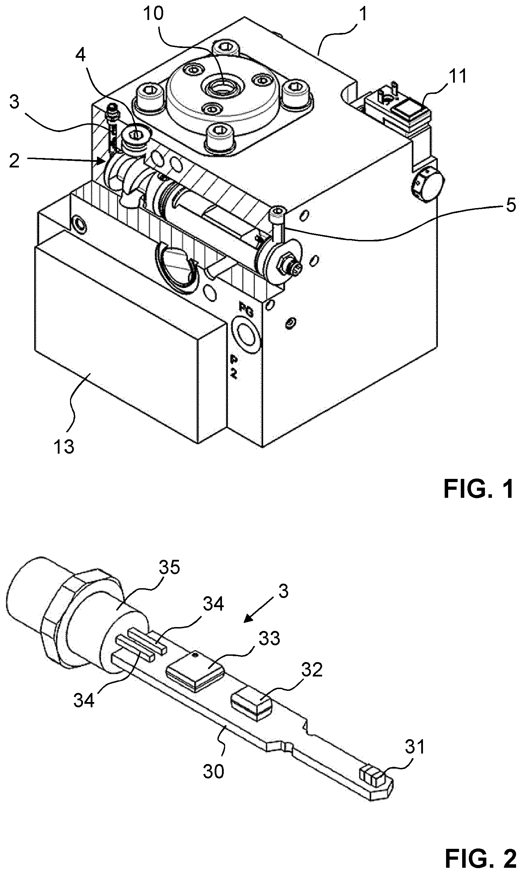

Figur 1 zeigt einen bevorzugten Anwendungsbereich der erfindungsgemässen Drosseleinheit. Es handelt sich um einen Gehäuseblock einer Blasformmaschine, auch Ventilblock genannt. Der Ventilblock 1 weist eine Durchgangsbohrung 10 auf, die von einem Streckdorn durchsetzt ist. Ein Rohling eines aufzublasenden Körpers, insbesondere einer PET-Flasche oder eine PP-Flasche, lässt sich an oder in der Durchgangsbohrung 10 anordnen. Derartige Blasformmaschinen sind im Stand der Technik weitgehend bekannt und werden deshalb nicht weiter beschrieben.

Sie weisen mehrere Prozessventile auf, die im Verlaufe des Blasprozesses zu unterschiedlichen Zeiten betätigt werden, um den Rohling mittels Blasluft in die gewünschte Form zu bringen. In dieser Ansicht ist ein Pilotventil 11 eines Prozessventils zu sehen. Weitere Prozessventile, genauer ein Vorblas- und ein Hauptblasventil, sind durch einen Ventildeckel 13 überdeckt und in dieser Figur deshalb nicht sichtbar.

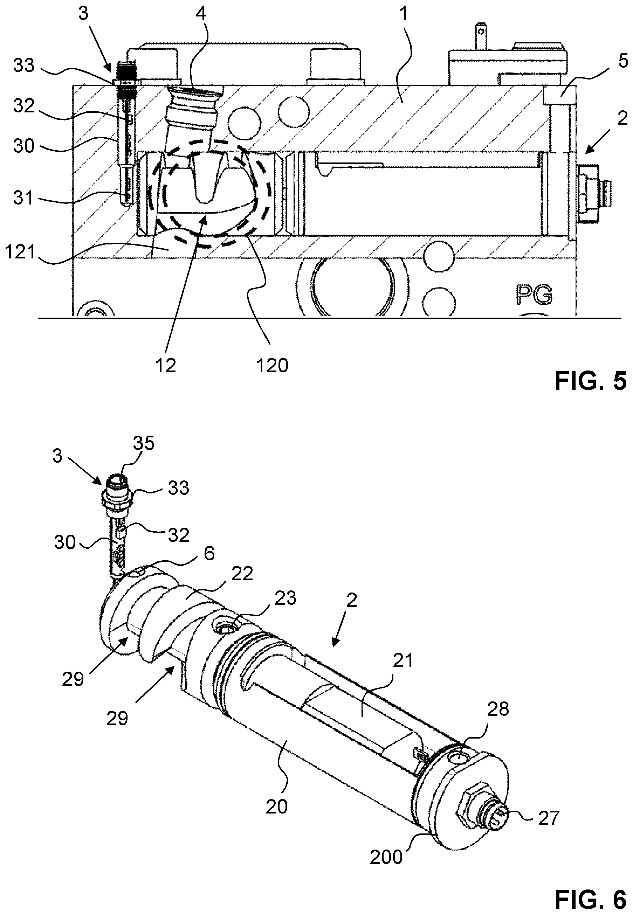

Ein Prozessfluid, hier Blasluft, lässt sich über einen Durchflusskanal 12 von aussen in den Ventilblock führen. Der Abschnitt des Durchflusskanals 12, der sich zwischen einer Einlassöffnung 120 und einer Auslassöffnung 121 im Bereich der Drossel 2 befindet, ist in Figur 5 dargestellt.

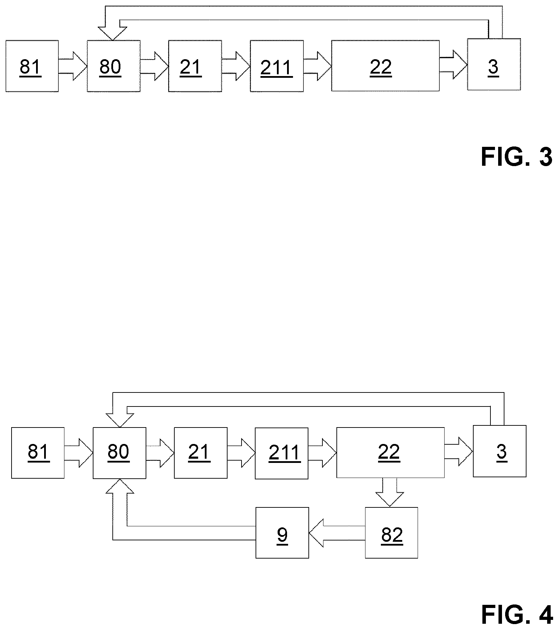

Der Ventilblock 1 ist kommunikativ mit einer Steuereinheit 80 und diese mit einer Maschinensteuerung 81 verbunden. Die Steuereinheit 80 und die Maschinensteuerung sind in den Figuren 3 und 4 schematisch dargestellt.

Am oder, wie hier dargestellt, im Ventilblock 1 ist eine erfindungsgemässe Drosseleinheit angeordnet. Sie umfasst eine Drossel 2 und einen Positionssensor 3.

Die Drossel 2 ist im Wesentlichen zylinderförmig ausgebildet und in eine Bohrung des Ventilblocks 1 eingesteckt oder eingeschoben. Ihr Mantel ist vollständig vom Ventilblock 1 umgeben. In der Figur 1 ist der Ventilblock 1 in diesem Bereich geschnitten dargestellt, damit die Drossel 2 erkennbar ist. Im realen Ventilblock 1 ist lediglich ihr in Figur 1 rechtes Ende von aussen erkennbar.

Der Positionssensor 3 ist benachbart zur Drossel 2 im Ventilblock 1 angeordnet. In diesem Beispiel ist er an einer Stirnseite der Drossel 2 angeordnet. Ein dichtender Verschluss-Stopfen 4 verschliesst eine Bohrung im Ventilblock 1, die zur Drossel 2 führt, von aussen.

Eine Befestigungsschraube 5 fixiert die Drossel 2 an einem dem Positionssensor 3 gegenüberliegenden Ende der Drossel 2.

In Figur 2 ist ein bevorzugtes Ausführungsbeispiel eines Positionssensors 3 dargestellt. Er weist vorzugsweise eine längliche Form auf. Dadurch benötigt er wenig Platz und er kann auf einfache Art und Weise in eine Bohrung des Ventilblocks 1 eingeführt werden. Der Positionssensor 3 lässt sich gehäuselos ausbilden, da der Ventilblock 1 sein schützendes Gehäuse bildet. Der Positionssensor 3 weist eine vorzugsweise flache Grundplatte 30 auf, an deren vorderem freien Ende ein Magnetfeld-Sensor, vorzugsweise ein Hall-Sensor 31 angeordnet ist. Anstelle eines Hall-Sensors lassen sich auch andere Sensoren verwenden, beispielsweise ein magneto-resistiver Sensor.

Wie in Figur 2 erkennbar ist, lassen sich auf der Grundplatte 30 noch weitere Elemente anordnen. Vorzugsweise ist ein Speicher 32 vorhanden, um Messwerte, jedoch auch Korrekturwerte lokal zu speichern. Vorzugsweise ist eine Elektronikeinheit 33 vorhanden, um den Magnetfeldsensor zu betreiben und die Messwerte an die Steuereinheit 80 weiterzuleiten.

An einem dem Hall-Sensor gegenüberliegenden Ende weist der Positionssensor 3 einen Stecker 35 auf, der mit einer Stecker-Verbindung 34 auf die Grundplatte 30 gelötet ist. Der Stecker 35 ragt aus dem Ventilblock heraus und dient einerseits als zweite Lagerung und andererseits zur Verbindung mit der Steuereinheit 80. Der Positionssensor 3 ist vorzugsweise lösbar im Ventilblock 1 angeordnet.

Die Drossel 2, genauer ein weiter unten beschriebenes Stellglied 22, verengt einen Durchflussquerschnitt im Durchflusskanal 12 und verändert somit das Durchflussvolumen. Der Positionssensor 3 überwacht die Position der Drossel 2. Genauer überwacht er das Stellglied 22 und bestimmt so dessen genaue Position. Die Position des Stellglieds 22 wird mittels eines Elektromotors 21, der vorzugsweise ein Getriebe 211 aufweist, verändert.

Anhand der Figuren 3 und 4 lässt sich erläutern, in welcher Form die Drosseleinheit beispielsweise betrieben und verwendet werden kann.

Eine Maschinensteuerung 81, vorzugsweise eine speicherprogrammierbare Steuerung (SPS), kommuniziert mit einer Steuereinheit 80, auch Control Box genannt. Die Steuereinheit 80 wirkt auf den Elektromotor 21 der Drossel 2, der über ein optional vorhandenes Getriebe 211 die Position des Stellglieds 22 der Drossel 2 verändert. Diese Veränderung wird vom Positionssensor 3 detektiert. Der Positionssensor 3 meldet die veränderte Position an die Steuereinheit 80. Basierend auf diesen gemeldeten Daten und optional nach Massgabe der Maschinensteuerung 81 verändert die Steuereinheit die Steuerdaten des Elektromotors 21 und somit die Position des Stellglieds 22. Dies erfolgt vorzugsweise bei einer Neueinstellung der Prozessvorrichtung, insbesondere der Blasformmaschine. Beispielsweise, wenn eine neue Art Hohlkörper aufgeblasen werden soll oder wenn die Drossel 2 oder ein anderes Verbrauchsteil der Vorrichtung altert oder ausgewechselt worden ist. Die Maschinensteuerung 81 gibt in diesem Fall vorzugsweise einen Sollwinkel der Drossel 2 vor.

In der Variante gemäss Figur 4 wird auch während des Produktionsprozesses geregelt. Dies erfolgt vorzugsweise jedoch ausschliesslich zwischen den Schaltzyklen der einzelnen Prozessventile. D.h. im Durchflusskanal 12 herrscht ein Druck, jedoch kein Fluss des Prozessfluids.

Hierzu ist vorzugsweise ein Drucksensor 9 vorhanden, der im Prozess 82 den Prozessdruck, beispielsweise im Bereich des Vorformlings, misst. Die Maschinensteuerung 81 gibt in diesem Fall vorzugsweise einen Solldruck oder einen Solldruck-Anstieg vor. Die Steuereinheit 80 passt beim nächsten Blaszyklus den Winkel der Drossel 2, basierend auf dieser Vorgabe und unter Berücksichtigung der gemessenen Position des Stellglieds 22 sowie des Druckwerts des Drucksensors 9, selbständig an. Vorzugsweise ist keine konstante Regelung vorhanden, sondern lediglich eine Veränderung zwischen den Blaszyklen bei Abweichung von Sollwerten. Auf diese Weise lässt sich in der Drossel 2 ein kostengünstiger Elektromotor verwenden, der dank den wenigen Schaltzyklen eine genügend lange Lebensdauer aufweist.

In den Figuren 5 bis 8 ist ein bevorzugtes Ausführungsbeispiel der erfindungsgemässen Drosseleinheit gut erkennbar.

Die Drossel 2 weist das Stellglied 22 sowie eine Antriebseinheit mit einem Gehäuse 20 und dem Elektromotor 21 auf. Das Gehäuse 20 ist vorzugsweise nach oben offen ausgebildet, so dass es eine Wanne zur Aufnahme des Elektromotors 21 ausbildet. In anderen Ausführungsformen ist das Gehäuse 20 über den ganzen Umfang geschlossen ausgebildet. Das Gehäuse 20 ist vorzugsweise einteilig ausgebildet. An einem in Einschubrichtung in den Ventilblock 1 vorderen Ende ist das Stellglied 22 angeordnet. Das Stellglied 22 und das gedanklich zu einem geschlossenen Zylinder ergänzte Gehäuse 20 weisen vorzugsweise denselben oder annähernd denselben Aussendurchmesser auf. Der Aussendurchmesser ist vorzugsweise lediglich geringfügig kleiner als der Innendurchmesser der Bohrung des Ventilblocks 1.

Das rechte, dem Stellglied 22 entfernte Ende des Gehäuses 20 bildet einen Flansch 200 aus, der als äusserer Anschlag am Ventilblock 1 dient. Die Befestigungsschraube 5 fixiert dieses Ende und somit die Drossel 2 in der Bohrung des Ventilblocks 1. Die Befestigungsschraube 5 ist hierzu in einer in Figur 6 dargestellten Öffnung 28 im zum Flansch 200 benachbarten Bereich des Gehäuses 20 aufgenommen.

Ein anschliessender äusserer Dichtring 26 dichtet die Drossel 2 gegen aussen ab. Der Flansch 200 ist von einem Stecker 27 durchdrungen, der den Elektromotor 21 mit der Steuereinheit 80 verbindet.

Das Stellglied 22 ist ebenfalls im Wesentlichen zylinderförmig ausgebildet. Es bildet einen Strömungskanal 29 zwischen einer Eingangsöffnung 120 und einer Ausgangsöffnung 121 des Durchflusskanals 12 aus. Dies ist in Figur 5 gut erkennbar. Der Abschnitt des Durchflusskanals 12 vom dargestellten nach aussen führenden Ende bis zur Eingangsöffnung 120 ist aufgrund des Teilschnitts in Figur 1 und der Schnitte gemäss den Figuren 5, 7 und 8 nicht erkennbar. Er kann jedoch beliebig innerhalb des Ventilblocks 1 verlaufen.

Das Stellglied 22 ist direkt mit einer Motorachse 210 des Elektromotors 21 verbunden. Als Fixierungsmittel dient vorzugsweise eine Madenschraube 23.

Die Motorachse 210 ist gegenüber dem Gehäuse 20 mittels eines Dichtrings 25 dynamisch gedichtet. Vorzugsweise ist dies die einzige dynamische Dichtung gegenüber dem Ventilblock bzw. ortsfesten Bauteilen. Eine innere Dichtung 24 dichtet das dem Stellglied 22 zugewandte, vordere Ende des Gehäuses 20 gegenüber dem Ventilblock 1.

Das Stellglied 22 ist selber nicht gedichtet. Es ist jedoch ein gestrichelt dargestellter Dichtring bei der Eingangsöffnung 120 und ein nicht dargestellter Dichtring bei der Ausgangsöffnung 121 vorhanden.

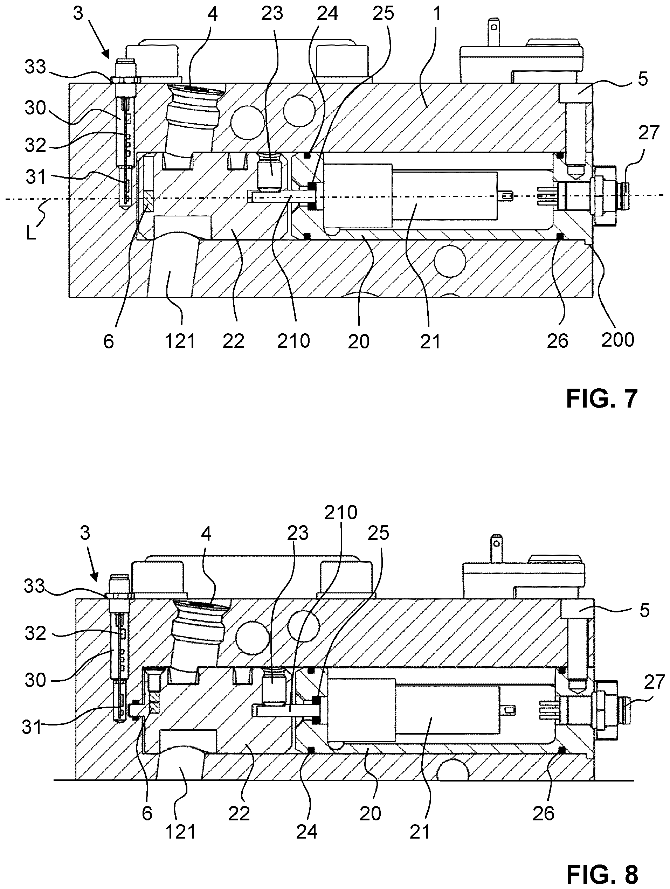

An dem Elektromotor 21 abgewandten Ende des Stellglieds 22 ist ein Magnet 6, vorzugsweise ein Permanentmagnet, angeordnet. In den Beispielen gemäss den Figuren 7 und 8 ist dies ein Stabmagnet, der sich senkrecht zur Längsmittelachse L der Drossel 2 erstreckt. Er ist benachbart zum Positionssensor 3 angeordnet, wobei er in eine im Stellglied 22 angeordnete Bohrung eingeschoben ist, so dass er sich benachbart zur Stirnseite des Stellglieds 22 befindet.

Der Magnet 6 ist vorzugsweise zentrisch zur Längsmittelachse L angeordnet, wobei sein durch seinen Nord- und Südpol definierte Achse senkrecht zur Längsmittelachse verläuft. Wird das Stellglied 22 mittels des Elektromotors 21 um die Längsmittelachse L gedreht, so verändert sich das vom Hall-Sensor 31 detektierte Magnetfeld des Magneten 6 und die Veränderung des Drehwinkels des Stellglieds lässt sich detektieren. Ist eine Null-Position des Stellglieds 22 bekannt, so lässt sich der effektive Drehwinkel und somit die Veränderung des Durchflussquerschnitts berechnen. Die Nullposition des Drehwinkels ist vorzugsweise eine vollständige Öffnung des Durchflussquerschnitts oder ein vollständiger Verschluss.

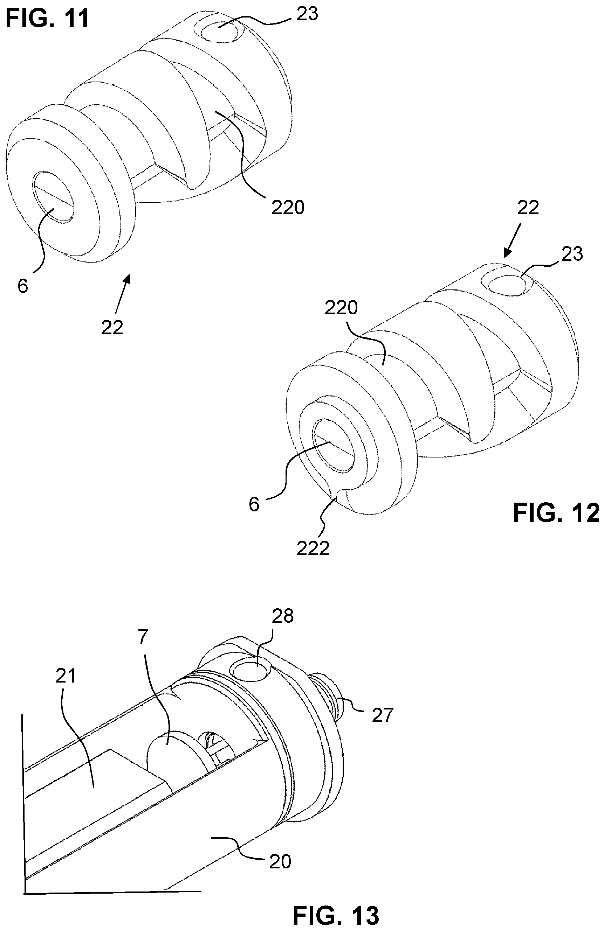

In anderen Ausführungsformen ist der Magnet 6 ein Scheibenmagnet, wie dies in den Figur 11 dargestellt ist. Die Trennlinie innerhalb des Magnets zeigt in den Figuren den Nord- und Südpol des Magneten 6. Das Messprinzip ist grundsätzlich dasselbe. Andere Magnetformen lassen sich ebenfalls verwenden.

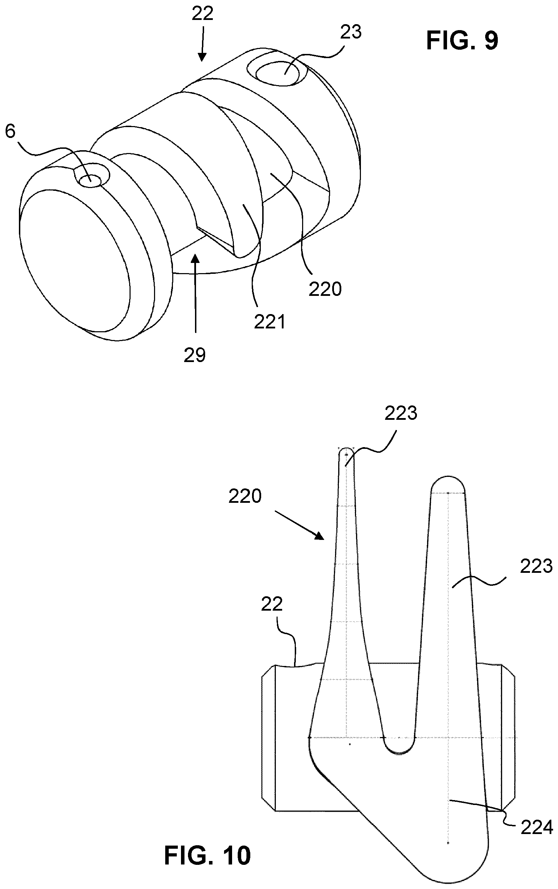

Wie in den Figuren 9 und 11 gut erkennbar ist, ist das Stellglied 22 vorzugsweise einteilig ausgebildet. Es weist einen im Wesentlichen zylinderförmigen Grundkörper auf, dessen dem Positionssensor 3 zugewandte Stirnseite geschlossen ausgebildet ist. Diese Stirnseite kann, wie in den Ausführungsformen gemäss den Figuren 11 und 12 erkennbar ist, eine Vertiefung für den Magneten 6 aufweisen. Sie ist jedoch vorzugsweise stets bezüglich des Strömungskanals 29 geschlossen.

Das Stellglied 22 weist eine sich über den Umfang windende Vertiefung 220 auf, so dass der übrige Mantel 221 eine Erhöhung bildet. Diese Vertiefung 220 bildet gemeinsam mit dem erhöhten Mantelbereich den Strömungskanal 29 aus. Somit weist das Stellglied 22 keinerlei Durchgangsöffnungen für den Strömungskanal 29 auf. In Figur 10 ist die Abwicklung der Vertiefung 220 erkennbar. Sie weist zwei Schenkel 223 auf, die vorzugsweise parallel zueinander verlaufen. Die Schenkel 223 verjüngen sich zu ihrem jeweiligen freien Ende hin. Die Schenkel 223 sind vorzugsweise nicht gleich breit. Vorzugsweise ist der schmale Schenkel zur Eingangsöffnung 120 hingewandt und verengt den Durchflussquerschnitt maximal.

Die zwei Schenkel 223 sind über einen Steg 224 miteinander verbunden. Der Steg 224 ist vorzugsweise ebenfalls asymmetrisch ausgebildet, wobei er vorzugsweise vom eingangsseitigen Schenkel 223 zum ausgangsseitigen zweiten Schenkel 223 hin einen Winkel ausbildet, wie dies in Figur 10 erkennbar ist.

Der Strömungskanal 29 lässt sich auch in anderen Formen ausbilden.

In Figur 11 ist der Magnet 6 ein Scheibenmagnet. Er ist in einer Vertiefung in der Stirnseite des Stellglieds 22 angeordnet. Die übrigen Elemente des Stellglieds 22 sind vorzugsweise dieselben wie im ersten Ausführungsbeispiel.

In Figur 12 weist das Stellglied eine Nase 222 auf, die als Positionierhilfe für die Definition der Nulleinstellung, d.h. die Definition zur eingangs erwähnten Position "0", der Drossel 2 aufweist.

In Figur 13 ist im hinteren, dem Stellglied 22 abgewandten Ende des Gehäuses 20 ein Speicherelement 7, hier ein RFID-Tag, angeordnet, auf dem sich bei der Herstellung der Drossel 2, jedoch vorzugsweise auch während des Betriebs der Drossel 2, Daten speichern lassen. Vorzugsweise sind mindestens Korrekturdaten zur Korrektur der Position des Stellglieds 22 gespeichert.

Die erfindungsgemässe Drosseleinheit ermöglicht eine genaue und trotzdem kostengünstige automatische Einstellung und Justierung der Drossel.

### BEZUGSZEICHENLISTE

| | | | |
|---|---|---|---|
| 1 | Ventilblock | | |
| 10 | Durchgangsbohrung | 3 | Positionssensor |
| 11 | Ventil | 30 | Grundplatte |
| 12 | Durchflusskanal | 31 | Hall-Sensor |
| 120 | Eingangsöffnung | 32 | Speicher |
| 121 | Ausgangsöffnung | 33 | Elektronikeinheit |
| 13 | Ventildeckel | 34 | Stecker-Verbindung |
| | | 35 | Stecker |
| 2 | Drossel | | |
| 20 | Gehäuse | 4 | Verschluss-Stopfen |
| 200 | Flansch | | |
| 21 | Elektromotor | 5 | Befestigungsschraube |
| 210 | Motorachse | | |
| 211 | Getriebe | 6 | Magnet |
| 22 | Stellglied | | |
| 220 | Vertiefung | 7 | Speicherelement |
| 221 | Mantel | | |
| 222 | Nase | 80 | Steuereinheit |
| 223 | Schenkel | 81 | Maschinensteuerung |
| 224 | Steg | 82 | Prozess |
| 23 | Madenschraube | | |
| 24 | innerer Dichtring | 9 | Drucksensor |
| 25 | Dichtring der dynamischen | | |
| | Dichtung | L | Längsmittelachse |
| 26 | äusserer Dichtring | | |
| 27 | Stecker | | |
| 28 | Aufnahmeöffnung | | |
| 29 | Strömungskanal | | |

## Patentansprüche

1. Drosseleinheit, insbesondere einer Blasformvorrichtung, mit einer Drossel (2) und einem Positionssensor (3),
wobei die Drossel (2) ein Stellglied (22) und eine Antriebseinheit mit einem Elektromotor (21) zur Veränderung einer Position des Stellglieds (22) aufweist,
wobei durch Veränderung der Position des Stellglieds (22) ein Durchflussquerschnitt in einem Durchflusskanal (12) eines Fluids veränderbar ist,
wobei die Antriebseinheit an einem ersten Ende des Stellglieds (22) angeordnet ist, **dadurch gekennzeichnet,**
**dass** der Positionssensor (3) die Position des Stellglieds (22) direkt überwacht.

2. Drosseleinheit nach Anspruch 1, wobei der Positionssensor (3) in einem Bereich eines dem ersten Ende gegenüberliegenden zweiten Endes des Stellglieds (22) angeordnet ist.

3. Drosseleinheit nach Anspruch 2, wobei das Stellglied (22) einen Strömungskanal (29) aufweist, der vom Fluid durchströmbar ist, und wobei das Stellglied (22) am zweiten Ende bezüglich des Strömungskanals (29) geschlossen ausgebildet ist.

4. Drosseleinheit nach einem der Ansprüche 1 bis 3, wobei das Stellglied (22) am zweiten Ende eine Stirnseite aufweist und wobei der Positionssensor (3) dieser Stirnseite zugewandt ist.

5. Drosseleinheit nach einem der Ansprüche 1 bis 4, wobei das erste Ende und das zweite Ende eine Längsmittelachse (L) definieren und dass das Stellglied (22) um die Längsmittelachse (L) drehbar ist.

6. Drosseleinheit nach einem der Ansprüche 1 bis 5, wobei der Positionssensor (3) ein Magnetfeldsensor, insbesondere ein Hall-Sensor ist und wobei
ein Magnet (6) oder ein magnetisierbares Element in der Drossel (2), vorzugsweise im Stellglied (22), angeordnet ist.

7. Drosseleinheit nach Anspruch 6, wobei der Magnet (6) oder das magnetisierbare Element in oder an einem stirnseitigen Bereich der Drossel (2) angeordnet ist.

8. Drosseleinheit nach einem der Ansprüche 1 bis 7, wobei das Stellglied (22) Öffnungen und/oder Ausnehmungen (220) aufweist, die den Strömungskanal (29) bilden, und wobei alle Öffnungen und Ausnehmungen (220) des Strömungskanals (29) beabstandet zum zweiten Ende angeordnet sind.

9. Drosseleinheit nach einem der Ansprüche 1 bis 8, wobei das Stellglied (22) einen kreiszylinderförmigen Grundkörper aufweist mit einer nach aussen offen ausgebildeten, sich windenden Vertiefung (220), die den Strömungskanal (29) bildet.

10. Drosseleinheit nach Anspruch 9, wobei die Vertiefung (220) eine Abwicklung aufweist, die aus Schenkeln (223) und einen die zwei Schenkel (223) miteinander verbindenden Steg (224) aufweist.

11. Drosseleinheit nach Anspruch 10, wobei die zwei Schenkel (223) annähernd parallel zu einander verlaufen.

12. Drosseleinheit nach Anspruch 11, wobei die zwei Schenkel (223) senkrecht zur Längsmittelachse (L) des Stellglieds (22) verlaufen.

13. Drosseleinheit nach einem der Ansprüche 1 bis 12, wobei der Elektromotor (21) eine Motorwelle (210) aufweist, die dynamisch gedichtet ist und wobei die dynamische Dichtung (25) der Motorwelle (21) die einzige dynamische Dichtung zur Dichtung der Drossel (2) gegenüber einem äusseren Gehäuse (1) ist, welches die Drossel (2) aufnimmt.

14. Vorrichtung mit der Drosseleinheit gemäss einem der Ansprüche 1 bis 13 und mit einem Aussengehäuse (1), das den Durchlasskanal (12) aufweist,
wobei das Stellglied (22) im Durchlasskanal (12) angeordnet ist,
wobei der Durchlasskanal (12) eine Eingangsöffnung (120) zur Zuführung des Fluids in den Strömungskanal (29) des Stellglieds (22) und eine Ausgangsöffnung (121) zur Wegführung des Fluids aus dem Strömungskanal (29) des Stellglieds (22) aufweist und
wobei die Eingangsöffnung (120) und die Ausgangsöffnung (121) quer zu einer Längsmittelachse (L) des Stellglieds (22) angeordnet sind.

15. Vorrichtung nach Anspruch 14, wobei die Drossel (2) an ihrem dem Stellglied (22) fernen Ende einen Flansch (200) aufweist, der zur Fixierung der Drossel (2) im Aussengehäuse (1) dient.
